# EUROPEAN PATENT APPLICATION

(11) **EP 2 711 525 A1**
(43) Date of publication of application: **26.03.2014**
(21) Application number: 11865504.2
(22) Date of filing: 17.05.2011
(51) Int. Cl.: F02D 19/08, F02D 13/02, F02D 19/06

(54) **CONTROL SYSTEM FOR MULTIFUEL INTERNAL COMBUSTION ENGINE**

(71) Applicant: TOYOTA JIDOSHA KABUSHIKI KAISHA, Toyota-shi, Aichi-ken, 471-8571 (JP)
(72) Inventor: HOSHI, Koichi, Toyota-shi, Aichi-ken, 471-8571 (JP); NAKAYAMA, Yusuke, Toyota-shi, Aichi-ken, 471-8571 (JP)
(74) Representative: TBK
(86) International application number: PCT/JP2011/061313
(87) International publication number: WO 2012/157076

(57) **Abstract**

An object of the present invention is to provide a control system for a multi-fuel internal combustion engine capable of using gaseous fuel and liquid fuel, with which variation in an air-fuel ratio of an air-fuel mixture following a switch in the fuel used by the internal combustion engine is suppressed. To achieve this object, the present invention provides a control system for a multi-fuel internal combustion engine capable of using gaseous fuel and liquid fuel, in which, when the fuel used by the internal combustion engine is switched, an amount of burned gas remaining in a cylinder before and after the switch is modified, whereby variation in an amount of wall surface adhered fuel is suppressed using heat of the residual gas.

## Description

### TECHNICAL FIELD

The present invention relates to a technique of controlling a multi-fuel internal combustion engine capable of using gaseous fuel and liquid fuel.

### BACKGROUND ART

An internal combustion engine that can be operated using a plurality of types of fuel has been proposed recently. In a technique proposed for use with this type of internal combustion engine, the internal combustion engine is started using gaseous fuel when an outside air temperature or an engine temperature is low, and the fuel used by the internal combustion engine is switched from the gaseous fuel to liquid fuel when the engine temperature increases (see Patent Document 1, for example).

### PRIOR ART DOCUMENTS

### Patent Documents

Patent Document 1: Japanese Patent Application Laid-Open No. 2007-051550

### DISCLOSURE OF THE INVENTION

### Problem To Be Solved By The Invention

Incidentally, gaseous fuel differs from liquid fuel in the amount of fuel which adhere to wall surfaces of an intake passage and an interior of a cylinder (wall surface adhered fuel). Therefore, when a switch is performed between the gaseous fuel and the liquid fuel, an air-fuel ratio of an air-fuel mixture may vary due to variation in the amount of wall surface adhered fuel. When the air-fuel ratio of the air-fuel mixture varies, an increase in exhaust emissions, an increase in torque variation, and so on may occur.

The present invention has been designed in consideration of the circumstances described above, and an object thereof is to suppress variation in an air-fuel ratio of an air-fuel mixture when the fuel used by the internal combustion engine is switched, in a control system for a multi-fuel internal combustion engine capable of using gaseous fuel and liquid fuel.

### Means For Solving The Problem

To solve the problem described above, the present invention provides a control system for a multi-fuel internal combustion engine capable of using gaseous fuel and liquid fuel, in which when the fuel used by the internal combustion engine is switched, an amount of burned gas remaining in a cylinder (to be referred to hereafter as "residual gas") before and after the switch is modified, whereby variation in an amount of wall surface adhered fuel is suppressed using heat of the residual gas.

When fuel supplied to the internal combustion engine from a supply device, or in other words the fuel used to operate the internal combustion engine (to be referred to hereafter as the "using fuel") is the gaseous fuel, the amount of wall surface adhered fuel is smaller than when the using fuel is the liquid fuel. Therefore, when the using fuel is switched from the gaseous fuel to the liquid fuel, the air-fuel ratio of the air-fuel mixture is larger (leaner) after the switch than before the switch. On the other hand, when the using fuel is switched from the liquid fuel to the gaseous fuel, the air-fuel ratio of the air-fuel mixture is smaller (richer) after the switch than before the switch.

When the air-fuel ratio of the air-fuel mixture varies due to a switch in the using fuel, variation may occur in a purification rate of an exhaust gas purification catalyst disposed in an exhaust system of the internal combustion engine and an amount of thermal energy generated by combustion of the air-fuel mixture. As a result, increases in exhaust emissions, torque variation, and so on may occur.

One countermeasure against the above-described problem may be to correct the amount of supplied liquid fuel so as to increase it when the using fuel is the liquid fuel. In so doing, however, increases in fuel consumption and an amount of discharged unburned components may occur.

Other countermeasure against the above-described plobrem may be to prohibit the use of the liquid fuel when the possibility of the liquid fuel adhering to the wall surfaces of the intake passage and the cylinder interior exists. However, the gaseous fuel has a lower energy storage density than the liquid fuel, and therefore an amount of gaseous fuel that can be stored in a fuel tank of a vehicle may be lower than an amount of storable liquid fuel. As a result, if an operatin region in which the gaseous fule is used is enlarged, it may become necessary to replenish the gaseous fuel frequently, and it may also become impossible to use the gaseous fuel in the operating region where the gaseous fuel is used.

Hence, the present invention provides a control system for a multi-fuel internal combustion engine capable of using a gaseous fuel and a liquid fuel, including:
a supply device that supplies at least one of the gaseous fuel and the liquid fuel to the internal combustion engine;
a variable valve mechanism that changes opening and closing timings of an exhaust valve; and
a control unit that controls the variable valve mechanism, when the supply device is switched between supplying the gaseous fuel and supplying the liquid fuel, in a manner such that an amount of burned gas remaining in a cylinder during supply of the liquid fuel is larger than an amount of burned gas remaining in the cylinder during supply of the gaseous fuel.

In the control system for a multi-fuel internal combustion engine according to the present invention, when the using fuel is switched from the gaseous fuel to the liquid fuel, the amount of residual gas after the switch is larger than the amount of residual gas before the switch. In other words, a quantity of heat which is received by the liquid fuel from the residual gas after the switch in the using fuel is larger than a quantity of heat which is received by the gaseous fuel from the residual gas before the switch in the using fuel. As a result, variation in the amount of wall surface adhered fuel before and after a switch in the using fuel is suppressed.

On the other hand, when the using fuel is switched from the liquid fuel to the gaseous fuel, the amount of residual gas after the switch is smaller than the amount of residual gas before the switch. In other words, the quantity of heat which is received by the gaseous fuel from the residual gas after the switch in the using fuel is smaller than the quantity of heat which is received by the liquid fuel from the residual gas before the switch in the using fuel. As a result, variation in the amount of wall surface adhered fuel before and after a switch in the using fuel is suppressed.

Hence, according to the present invention, in the control system for a multi-fuel internal combustion engine, variation in the air-fuel ratio caused by a switch in the using fuel can be suppressed without correctively increasing the amount of liquid fuel or enlarging the operating region in which the gaseous fuel is used. As a result, increases in exhaust emissions and torque variation are suppressed.

When an internal temperature of the intake passage and the cylinder is high, variation in the amount of wall surface adhered fuel caused by a switch in the using fuel is unlikely to occur. Therefore, residual-gas-amount-adjustment-processing such as that described above may be executed only when a temperature of the internal combustion engine is lower than a predetermined temperature. Here, a cooling water temperature or a lubricating oil temperature may be used as the "temperature of the internal combustion engine". Further, a minimum temperature at which the liquid fuel adhered to the wall surfaces of the intake passage and the cylinder interior can be vaporized sufficiently or a temperature of the internal combustion engine upon completion of warm-up may be used as the "predetermined temperature".

Incidentally, liquid fuel containing alcohol may be used as the liquid fuel for the internal combustion engine. Liquid fuel containing alcohol vaporizes less easily than liquid fuel not containing alcohol. Therefore, when the liquid fuel contains alcohol, the amount of wall surface adhered fuel may be larger than when the liquid fuel does not contain alcohol.

Hence, the control system for a multi-fuel internal combustion engine according to the present invention may adjust the amount of burned gas (the amount of residual gas) remaining in the cylinder during supply of the liquid fuel in accordance with a concentration of alcohol contained in the liquid fuel. For example, the control system for a multi-fuel internal combustion engine according to the present invention may further be provided with a detection unit that detects a concentration of alcohol contained in the liquid fuel. In this case, the control unit may control the variable valve mechanism in order to make the amount of residual gas during supply of the liquid fuel larger when the alcohol concentration detected by the detection unit is high than when the alcohol concentration is low.

According to this configuration, variation in the amount of wall surface adhered fuel caused by a switch in the using fuel can be suppressed even when the liquid fuel contains alcohol. In other words, variation in the air-fuel ratio caused by a switch in the using fuel can be suppressed even when the liquid fuel contains alcohol.

Here, a method of making the closing timing of the exhaust valve earlier during supply of the liquid fuel than during supply of the gaseous fuel may be used as a method of increasing the amount of residual gas generated during supply of the liquid fuel above the amount of residual gas generated during supply of the gaseous fuel. In other words, the control unit according to the present invention may control the variable valve mechanism in order to make the closing timing of the exhaust valve earlier when the liquid fuel is supplied than when the gaseous fuel is supplied.

An amount of burned gas discharged from the cylinder is smaller when the closing timing of the exhaust valve is early than when the closing timing is late. In other words, when the closing timing of the exhaust valve is early, an amount of burned gas (residual gas) which is not discharged from the cylinder is larger than when the closing timing is late. Therefore, by making the closing timing of the exhaust valve during supply of the liquid fuel earlier than the closing timing of the exhaust valve during supply of the gaseous fuel, the amount of residual gas generated during supply of the liquid fuel can be increased above the amount of residual gas generated during supply of the gaseous fuel.

The control unit may also control the variable valve mechanism in a manner such that the closing timing of the exhaust valve during supply of the liquid fuel is earlier than exhaust top dead center and earlier than an opening timing of an intake valve.

According to the adjustment for the closing timing of the exhaust valve during supply of the liquid fuel in this method, the residual gas is compressed after the exhaust valve closes. For example, in case where the opening timing of the intake valve is set at an earlier timing than exhaust top dead center, the residual gas is compressed over a period extending from closure of the exhaust valve to opening of the intake valve. Further, in case where the opening timing of the intake valve is set at or after exhaust top dead center, the residual gas is compressed over a period extending from closure of the exhaust valve to exhaust top dead center (a timing at which a piston position reaches exhaust top dead center).

Therefore, by making the closing timing of the exhaust valve during supply of the liquid fuel earlier than exhaust top dead center and earlier than the opening timing of the intake valve, a temperature of the residual gas can be raised even further.

By the way, when a piston is in an exhaust stroke, unburned components (HC and so on, for example) adhered to a cylinder bore wall surface may be scraped up by the piston (a piston ring). When the piston approaches exhaust top dead center, the unburned components scraped up by the piston are likely to be discharged from the cylinder into an exhaust port. An amount of unburned components scraped up by the piston when the piston is in the exhaust stroke is larger during supply of the liquid fuel than during supply of the gaseous fuel.

However, in case that the closing timing of the exhaust valve during supply of the liquid fuel is set at an earlier timing than exhaust top dead center, the unburned components scraped up by the piston are less likely to be discharged into the exhaust system. In other words, the unburned components scraped up by the piston are shut away in the cylinder. Accordingly, by setting the closing timing of the exhaust valve at a timing that is earlier than exhaust top dead center and earlier than the opening timing of the intake valve, the amount of unburned components discharged from the internal combustion engine can be reduced.

Furthermore, if the opening timing of the intake valve is set at an earlier timing than exhaust top dead center when the closing timing of the exhaust valve is set at a timing that is earlier than exhaust top dead center and earlier than the opening timing of the intake valve, the high-temperature residual gas compressed in the cylinder flows back into the intake passage after the intake valve opens. In this case, the amount of liquid fuel adhered to the wall surface of the intake passage also decreases.

Therefore, the variable valve mechanism according to the present invention may be configured to be capable of changing not only the opening and closing timings of the exhaust valve but also the opening and closing timings of the intake valve. In this case, the control unit may control the variable valve mechanism such that when the liquid fuel is supplied, the opening timing of the intake valve is earlier than exhaust top dead center while the closing timing of the exhaust valve is earlier than exhaust top dead center and earlier than the opening timing of the intake valve.

According to this configuration, when the liquid fuel is supplied, the amounts of fuel adhered to both the wall surface of the cylinder interior and the wall surface of the intake passage can be reduced. As a result, variation in the amount of wall surface adhered fuel caused by a switch in the using fuel can be suppressed even further. Note that this configuration is effective in a case where the liquid fuel is supplied into the intake passage. Accordingly, when the liquid fuel is supplied directly into the cylinder, the opening timing of the intake valve need not be set at an earlier timing than exhaust top dead center.

The amount of wall surface adhered fuel during supply of the liquid fuel also varies in accordance with the wall surface temperature of the intake passage and the cylinder interior. The amount of burned gas remaining in the cylinder during supply of the liquid fuel is therefore preferably corrected in accordance with the wall surface temperature.

Hence, the control system for a multi-fuel internal combustion engine according to the present invention may further be provided with an obtaining unit that obtains a temperature correlating with a wall surface temperature of an intake passage or an interior of the cylinder. In this case, the control unit may control the variable valve mechanism in order to make the closing timing of the exhaust valve during supply of the liquid fuel later when the temperature obtained by the obtaining unit is high than when the temperature is low.

According to this configuration, variation in the amount of wall surface adhered fuel caused by a switch in the using fuel can be suppressed regardless of the wall surface temperature. Note that the temperature of the cooling water or lubricating oil circulating through the internal combustion engine may be used as the temperature that correlates with the wall surface temperature. Further, the heat quantity of the residual gas may be estimated, and the wall surface temperature may be calculated using a resulting estimation value and the cooling water temperature (or the oil temperature) as a parameter. The heat quantity of the residual gas may be calculated by calculating the temperature of the burned gas based on an intake air amount and a fuel injection amount, calculating the amount of residual gas based on the closing timing of the exhaust valve, and then calculating the heat quantity of the residual gas based on the temperature of the burned gas and the amount of residual gas.

Incidentally, the variable valve mechanism can not change the closing timing of the exhaust valve immediately. Particularly, according to a variable valve mechanism that changes opening and closing timings of an exhaust valve by changing a rotational phase of a cam shaft relative to a crankshaft, a response delay from the start of an operation of the variable valve mechanism to a point at which the opening/closing timing of the exhaust valve matches a target opening/closing timing is particularly likely to occur. During the response delay period, the amount of burned gas remaining in the cylinder differs from a desired amount. In case that the using fuel is switched from the gaseous fuel to the liquid fuel in particular, the amount of wall surface adhered fuel during the response delay period is larger than the amount during supply of the gaseous fuel. As a result, the air-fuel ratio of the air-fuel mixture may shift further toward the lean side than during supply of the gaseous fuel.

In view of the above, the control unit according to the present invention may control the supply device such that when the using fuel is switched from the gaseous fuel to the liquid fuel, both the liquid fuel and the gaseous fuel are supplied to the internal combustion engine during the aforesaid response delay period. In other words, in a period extending from a point at which the supply device is switched from the gaseous fuel to the liquid fuel to a point at which an actual closing timing of the exhaust valve matches a target closing timing appropriate for supply of the liquid fuel, the control unit may control the supply device in order to supply both the liquid fuel and the gaseous fuel to the internal combustion engine.

According to this configuration, in the period extending from the point at which the using fuel is switched from the gaseous fuel to the liquid fuel to the elapse of the response delay period, a shift in the air-fuel mixture to the lean side due to an increase in the amount of wall surface adhered fuel is suppressed. As a result, increases in exhaust emissions and torque variation during the response delay period are suppressed.

The control unit may also control the supply device in order to make an amount of the gaseous fuel which is supplied to the internal combustion engine larger when a difference between the actual closing timing and the target closing timing of the exhaust valve is large than when the difference is small. According to this method, a shift in the air-fuel mixture to the lean side due to an increase in the amount of wall surface adhered fuel during the response delay period can be suppressed more reliably.

### Effects Of The Invention

According to the present invention, a control system for a multi-fuel internal combustion engine capable of using gaseous fuel and liquid fuel can suppress variation in an air-fuel ratio of an air-fuel mixture resulting from a switch in the fuel used by the internal combustion engine.

### Brief Description Of The Drawings

Fig. 1 is a schematic view showing a configuration of an internal combustion engine to which the present invention is applied, according to a first embodiment;
Fig. 2 is a view showing opening and closing timings of intake and exhaust valves before and after a switch in a using fuel;
Fig. 3 is a view showing movement of residual gas when residual-gas-amount-adjustment-processing is executed;
Fig. 4 is a flowchart showing a residual-gas-amount-adjustment-processing routine according to the first embodiment;
Fig. 5 is a schematic view showing a configuration of an internal combustion engine to which the present invention is applied, according to a second embodiment;
Fig. 6 is a view showing a relationship between a concentration of alcohol fuel contained in liquid fuel and a negative overlap period of the intake and exhaust valves;
Fig. 7 is a flowchart showing a residual-gas-amount-adjustment-processing routine according to the second embodiment;
Fig. 8 is a view showing a relationship between a wall surface temperature of an intake port and so on and the negative overlap period of the intake and exhaust valves;
Fig. 9 is a flowchart showing a residual-gas-amount-adjustment-processing routine according to a third embodiment;
Fig. 10 is a view showing a relationship between a valve timing difference and a gaseous fuel injection amount; and
Fig. 11 is a flowchart showing a residual-gas-amount-adjustment-processing routine according to a fourth embodiment.

### The Best Mode For Carrying Out The Invention

In the following, specific embodiments of the present invention will be described with reference to the drawings. **The dimensions, materials, shapes and relative arrangements etc. of the components that will be described in connection with the embodiments are not intended to limit the technical scope of the present invention only to them, unless particularly stated.** in the embodiments.

### (First Embodiment)

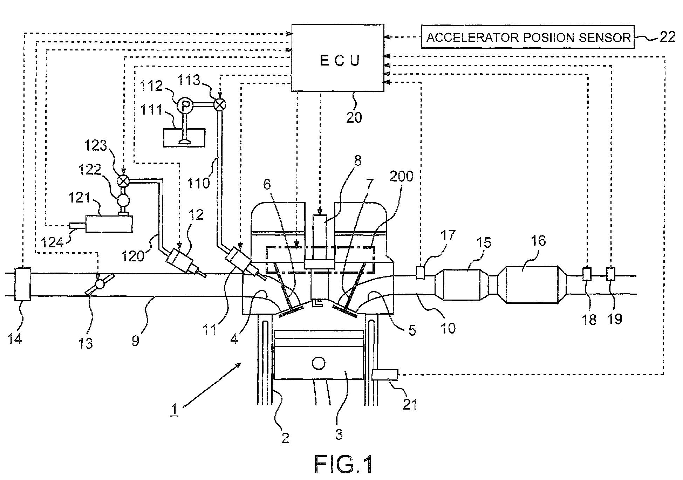

First, a first embodiment of a control system for a multi-fuel internal combustion engine according to the present invention will be described on the basis of Figs. 1 to 4. Fig. 1 is a schematic view showing a configuration of an internal combustion engine to which the present invention is applied. An internal combustion engine 1 shown in Fig. 1 is a spark ignition type internal combustion engine capable of using liquid fuel and gaseous fuel. Note that here, a petroleum-based liquid fuel such as gasoline or a non-methane hydrocarbon fuel such as a mixed liquid fuel formed by mixing ethanol, methanol, or the like into a petroleum-based liquid fuel may be used as the "liquid fuel". Further, compressed natural gas (CNG) may be used as the "gaseous fuel".

A piston 3 is loaded into a cylinder 2 of the internal combustion engine 1 to be free to slide. The piston 3 is coupled to an engine output shaft (a crankshaft) via a connecting rod, not shown in the drawing. The internal combustion engine 1 is provided with an intake port 4 through which fresh air (air) is introduced into the cylinder 2, and an exhaust port 5 through which burned gas is discharged from the cylinder 2. The internal combustion engine 1 is provided with an intake valve 6 for opening and closing an open end of the intake port 4, and an exhaust valve 7 for opening and closing an open end of the exhaust port 5. The intake valve 6 and the exhaust valve 7 are driven to open and close respectively by an intake cam shaft and an exhaust cam shaft, not shown in the drawing. The internal combustion engine 1 also is provided with a spark plug 8 for generating a spark in the cylinder 2.

The internal combustion engine 1 is provided with a variable valve mechanism 200 that changes opening and closing timings of the intake valve 6 and the exhaust valve 7 individually. For example, the variable valve mechanism 200 changes the opening and closing timings of the intake valve 6 and the opening and closing timings of the exhaust valve 7 by changing a rotational phase of the intake cam shaft relative to the crankshaft and a rotational phase of the exhaust cam shaft relative to the crankshaft. Note that the variable valve mechanism 200 may be configured as desired as long as it is capable of changing the opening and closing timings of the intake valve 6 and the exhaust valve 7 individually.

An intake passage 9 is connected to the intake port 4. The intake passage 9 is a passage for leading fresh air (air) taken in from the atmosphere to the intake port 4. Meanwhile, an exhaust passage 10 is connected to the exhaust port 5. The exhaust passage 10 is a passage for discharging burned gas (exhaust gas) flowing out of the exhaust port 5 into the atmosphere after the burned gas passes through exhaust gas purification devices 15, 16, to be described below, and so on.

Here, the internal combustion engine 1 is provided with a supply device for supplying the liquid fuel and the gaseous fuel to the internal combustion engine 1 selectively. The supply device is provided with a first fuel injection valve 11, a first fuel passage 110, a first fuel tank 111, a fuel pump 112, a first shut-off valve 113, a second fuel injection valve 12, a second fuel passage 120, a second fuel tank 121, a regulator 122, and a second shut-off valve 123. It is assumed that the first fuel injection valve 11 and the second fuel injection valve 12 are provided respectively in each cylinder.

The first fuel injection valve 11 is attached to the vicinity of the intake port 4 in the internal combustion engine 1 in order to inject the liquid fuel into the intake port 4. The first fuel injection valve 11 communicates with the first fuel tank 111 via the first fuel passage 110. The fuel pump 112 and the first shut-off valve 113 are disposed midway in the first fuel passage 110. The fuel pump 112 supplies the liquid fuel stored in the first fuel tank 111 to the first fuel injection valve 11. The first shut-off valve 113 is a device for switching the first fuel passage 110 between a shut-off condition and a communicative condition.

The second fuel injection valve 12 is attached to the vicinity of the intake port 4 within the intake passage 9 in order to inject the gaseous fuel into the intake passage 9. The second fuel injection valve 12 communicates with the second fuel tank (a CNG cylinder) 121 via the second fuel passage 120. The regulator 122 and the second shut-off valve 123 are disposed midway in the second fuel passage 120. The regulator 122 is a device for reducing a pressure of the compressed natural gas (CNG) to a predetermined pressure. The second shut-off valve 123 is a device for switching the second fuel passage 120 between a shut-off condition and a communicative condition. Further, a remainder sensor 124 that outputs an electric signal correlating with an amount of gaseous fuel stored in the second fuel tank 121 is attached to the second fuel tank 121.

A throttle valve 13 is disposed in the intake passage 9 upstream of the second fuel injection valve 12. The throttle valve 13 is a device that adjusts an amount of air introduced into the cylinder 2 by modifying a passage sectional area of the intake passage 9. An air flow meter 14 is attached to the intake passage 9 upstream of the throttle valve 13. The air flow meter 14 is a sensor that outputs an electric signal correlating with an amount (a mass) of air flowing through the intake passage 9.

The first exhaust gas purification device 15 and the second exhaust gas purification device 16 are disposed in the exhaust passage 10 in series. For example, the first exhaust gas purification device 15 and the second exhaust gas purification device 16 are provided with at least one of a three-way catalyst, an oxidation catalyst, and a NO_{X} catalyst, and purify HC, CO, NO_{X}, and so on contained in the exhaust gas.

An air-fuel ratio sensor 17 is disposed in the exhaust passage 10 upstream of the first exhaust gas purification device 15. The air-fuel ratio sensor 17 is a sensor that outputs an electric signal correlating with an air-fuel ratio of the exhaust gas flowing through the exhaust passage 10. Further, an O₂ sensor 18 and an exhaust gas temperature sensor 19 are disposed in the exhaust passage 10 downstream of the second exhaust gas purification device 16. The O₂ sensor 18 is a sensor that outputs an electric signal correlating with a concentration of oxygen (O₂) contained in the exhaust gas. The exhaust gas temperature sensor 19 is a sensor that outputs an electric signal correlating with a temperature of the exhaust gas.

An electronic control unit (ECU) 20 is annexed to the internal combustion engine 1 thus configured. The ECU 20 is electrically connected to various sensors such as a water temperature sensor 21 and an accelerator position sensor 22 as well as the air flow meter 14, the air-fuel ratio sensor 17, the O₂ sensor 18, and the exhaust gas temperature sensor 19 described above, and configured such that output signals from the various sensors can be input therein. The water temperature sensor 21 is a sensor that outputs an electric signal correlating with a temperature of cooling water circulating through the internal combustion engine 1. The accelerator position sensor 22 is a sensor that outputs an electric signal correlating with an operation amount (an accelerator opening) of an accelerator pedal, not shown in the drawing.

Further, the ECU 20 is electrically connected to various devices such as the spark plug 8, the first fuel injection valve 11, the second fuel injection valve 12, the throttle valve 13, the fuel pump 112, the first shut-off valve 113, the second shut-off valve 123, and the variable valve mechanism 200 described above, and configured to be capable of controlling these various devices in accordance with the output signals from the various sensors.

For example, when a using fuel for the internal combustion engine 1 is switched, the ECU 20 executes processing (to be referred to hereafter as "residual-gas-amount-adjustment-processing") for ensuring that amounts of wall surface adhered fuel before and after the switch are equal. A method of executing the residual-gas-amount-adjustment-processing according to this embodiment will be described below.

When the using fuel is switched during a warm-up process performed in the internal combustion engine 1 after a cold start, the amounts of wall surface adhered fuel before and after the switch may differ greatly. In particular, when the gaseous fuel is used during the cold start in the internal combustion engine 1 and the gaseous fuel is switched to the liquid fuel in the subsequent warm-up process, the amount of wall surface adhered fuel after the switch (when the liquid fuel is in use) may be much larger than the amount of wall surface adhered fuel before the switch (when the gaseous fuel is in use). The reason for this is that during the warm-up process performed in the internal combustion engine 1 after the cold start, a proportion of the liquid fuel injected from the first fuel injection valve 11 that cannot fully vaporize increases.

Hence, in the residual-gas-amount-adjustment-processing according to this embodiment, the ECU 20 controls the variable valve mechanism 200 so that when the fuel used by the internal combustion engine 1 is switched from the gaseous fuel to the liquid fuel, the amount of residual gas following the switch (when the liquid fuel is in use) is larger than the amount of residual gas before the switch (when the gaseous fuel is in use).

Here, a method of increasing an overlap period of the intake valve 6 and the exhaust valve 7 may be considered as a method of increasing the residual gas amount. When the overlap period is increased during the warm-up process performed in the internal combustion engine 1 after the cold start, the burned gas discharged into the exhaust port 5 from the cylinder 2 receives intake pipe negative pressure so as to flow back into the cylinder 2. As a result, an amount of burned gas (residual gas) remaining in the cylinder 2 increases. However, a temperature of the residual gas may decrease, leading to a reduction in combustion stability. Furthermore, with the method described above, a wall surface temperature and an atmospheric temperature in the cylinder 2 can be increased, but the wall surface temperature and the atmospheric temperature in the intake port 4 cannot be increased.

In the residual-gas-amount-adjustment-processing according to this embodiment, therefore, the ECU 20 controls the variable valve mechanism 200 so that after a switch in the using fuel, a closing timing of the exhaust valve 7 is earlier than before the switch. At this time, the ECU 20 preferably controls the variable valve mechanism 200 such that an opening timing of the intake valve 6 becomes earlier than exhaust top dead center, and the closing timing of the exhaust valve 7 becomes earlier than the opening timing of the intake valve 6.

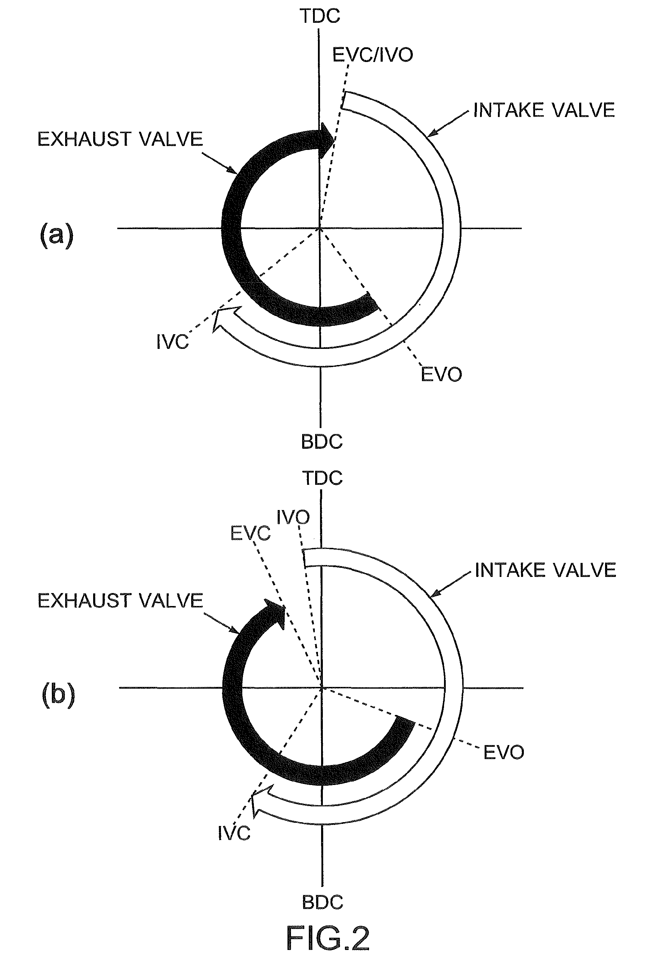

Here, Fig. 2 shows the opening and closing timings of the intake and exhaust valves 6, 7 when the gaseous fuel is in use and the opening and closing timings of the intake and exhaust valves 6, 7 when the liquid fuel is in use during a warm-up process performed in the internal combustion engine 1 after a cold start. Fig. 2A shows the opening and closing timings of the intake and exhaust valves 6, 7 when the gaseous fuel is in use, while Fig. 2B shows the opening and closing timings of the intake and exhaust valves 6, 7 when the liquid fuel is in use.

When the warm-up process is underway in the internal combustion engine 1 following the cold start, the combustion stability is lower than when the warm-up process is complete. Therefore, if the amount of residual gas is increased while the gaseous fuel is in use, a misfire or the like may occur. Hence, when the gaseous fuel is in use, the amount of residual gas is preferably minimized.

As shown in Fig. 2A, therefore, when the gaseous fuel is in use, the closing timing (EVC) of the exhaust valve 7 is set at or immediately after exhaust top dead center (TDC), and the opening timing (IVO) of the intake valve 6 is set at or later than the closing timing (EVC) of the exhaust valve 7. In other words, backflow of the burned gas is prevented by improving an exhaust efficiency using an operation of the piston 3 during an exhaust stroke (an operation in which the piston 3 moves from bottom dead center to top dead center), and by eliminating the overlap period.

When the liquid fuel is in use, on the other hand, an effect of an increase in the amount of wall surface adhered fuel on the combustion stability and exhaust emissions is greater than an effect of an increase in the amount of residual gas on the combustion stability. In other words, when the liquid fuel is in use, the effect of the increase in combustion stability obtained by reducing the amount of wall surface adhered fuel is greater than the effect of the reduction in combustion stability caused by increasing the amount of residual gas.

As shown in Fig. 2B, therefore, when the liquid fuel is in use, the opening timing (IVO) of the intake valve 6 is set at an earlier timing than exhaust top dead center (TDC), and the closing timing (EVC) of the exhaust valve 7 is set at an earlier timing than the opening timing (IVO) of the intake valve 6.

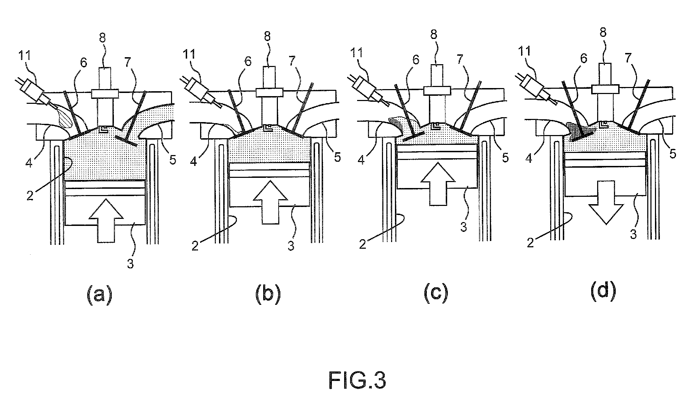

When the opening and closing timings of the intake and exhaust valves 6, 7 are set as shown in Fig. 2B, the burned gas in the cylinder 2 is discharged into the exhaust port 5 during a period of the exhaust stroke in which the exhaust valve 7 is open, as shown in Fig. 3A. When, thereafter, the exhaust valve 7 closes during the exhaust stroke, a part of the burned gas remains in the cylinder 2. As shown in Fig. 3B, the burned gas (residual gas) remaining in the cylinder 2 is compressed by the piston 3, and thereby increased in temperature, during a period extending from the closing timing (EVC) of the exhaust valve 7 to the opening timing (IVO) of the intake valve 6. Further, a part of the liquid fuel injected from the first fuel injection valve 11 adheres to the wall surface of the intake port 4 and a head portion of the intake valve 6 without vaporizing. Then, when the intake valve 6 opens before exhaust top dead center (TDC), the high-temperature burned gas is pushed out into the intake port 4 by the piston 3 during a period extending from the opening timing (IVO) of the intake valve 6 to exhaust top dead center (TDC), as shown in Fig. 3C. At this time, the fuel adhered to the wall surface of the intake port 4 and the head portion of the intake valve 6 receives the heat of the burned gas and vaporizes. When the piston 3 passes exhaust top dead center (TDC), the burned gas pushed out into the intake port 4 is taken into the cylinder 2 again together with the fuel, as shown in Fig. 3D. Further, the atmospheric temperature in the cylinder 2 is raised by the heat of the residual gas, and therefore the fuel taken into the cylinder 2 from the intake port 4 is less likely to adhere to a cylinder bore wall surface and so on. As a result, the amount of fuel adhered to the wall surface of the intake port 4 and the inner wall surface of the cylinder 2 decreases. Furthermore, as shown in Fig. 3B, when the exhaust valve 7 closes before exhaust top dead center (TDC) and before the opening timing (IVO) of the intake valve 6, an amount of unburned fuel components discharged into the exhaust port 5 from the cylinder 2, from among unburned fuel components scraped up by the piston 3 during the exhaust stroke, decreases, and therefore the amount of unburned fuel components discharged from the cylinder 2 can also be reduced.

By executing the residual-gas-amount-adjustment-processing described above, a difference between the amount of wall surface adhered fuel during use of the gaseous fuel and the amount of wall surface adhered fuel during use of the liquid fuel can be reduced. Accordingly, an amount of variation in the air-fuel ratio before and after a switch in the using fuel is reduced. As a result, problems arising following a switch in the using fuel, such as a reduction in torque generated by the internal combustion engine 1 and an increase in exhaust emissions, can be eliminated.

Further, by executing the residual-gas-amount-adjustment-processing described above, the need to adjust the fuel injection amount taking into consideration variation in the amount of wall surface adhered fuel following a switch in the using fuel is eliminated, and therefore an increase in the complexity of control logic relating to fuel injection can be avoided.

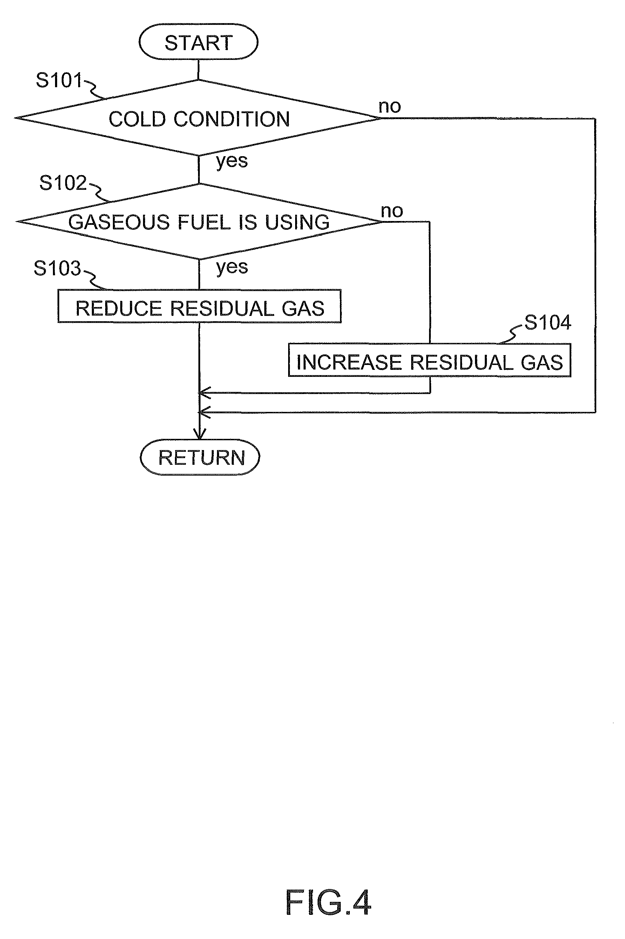

Procedures for executing the residual-gas-amount-adjustment-processing according to this embodiment will now be described using Fig. 4. Fig. 4 is a flowchart showing a residual-gas-amount-adjustment-processing routine. The residual-gas-amount-adjustment-processing routine shown in Fig. 4 is stored in a ROM or the like of the ECU 20 in advance, and executed periodically by the ECU 20.

In the residual-gas-amount-adjustment-processing routine of Fig. 4, first, in S101, the ECU 20 determines whether or not a warm-up process is underway in the internal combustion engine 1 following a cold start. In other words, the ECU 20 determines whether or not the internal combustion engine 1 is in a cold condition. A method of determining that the internal combustion engine 1 is in a cold condition when the output signal (the cooling water temperature) from the water temperature sensor 21 is lower than a cooling water temperature following warm-up completion (or a minimum cooling water temperature at which the amount of wall surface adhered liquid fuel may be considered to have decreased sufficiently) can be used as a determination method. Note that the determination as to whether or not the internal combustion engine 1 is in a cold condition may be made using the temperature (oil temperature) of the lubricating oil as a parameter instead of the cooling water temperature.

When the determination of S101 is negative, the ECU 20 stops executing the current routine. When the determination of S101 is affirmative, on the other hand, the ECU 20 advances to S102 in order to determine whether or not the fuel used by the internal combustion engine 1 is the gaseous fuel.

When the determination of S102 is affirmative, the ECU 20 advances to S103. In this case, a switch from the gaseous fuel to the liquid fuel has not yet been performed following cold-starting of the internal combustion engine 1. In S103, therefore, the ECU 20 controls the variable valve mechanism 200 to reduce the amount of residual gas. More specifically, as described above with reference to Fig. 2A, the ECU 20 controls the variable valve mechanism 200 such that the closing timing (EVC) of the exhaust valve 7 is set at or immediately after exhaust top dead center (TDC) and the opening timing (IVO) of the intake valve 6 is set at or later than the closing timing (EVC) of the exhaust valve 7. When the opening and closing timings of the intake and exhaust valves 6, 7 are set thus, the amount of residual gas falls to substantially zero, and therefore a reduction in the combustion stability is suppressed.

When the determination of S102 is negative, the ECU 20 advances to S104. In this case, a switch from the gaseous fuel to the liquid fuel has been performed following cold-starting of the internal combustion engine 1. In S104, therefore, the ECU 20 controls the variable valve mechanism 200 to increase the amount of residual gas. More specifically, as described above with reference to Fig. 2B, the ECU 20 controls the variable valve mechanism 200 such that the opening timing (IVO) of the intake valve 6 becomes earlier than exhaust top dead center (TDC) and the closing timing (EVC) of the exhaust valve 7 becomes earlier than the opening timing (IVC) of the intake valve 6. By setting the opening and closing timings of the intake and exhaust valves 6, 7 thus, the amount of wall surface adhered fuel following the switch from the gaseous fuel to the liquid fuel can be minimized. As a result, variation in the amounts of wall surface adhered fuel before and after the switch from the gaseous fuel to the liquid fuel is reduced, leading to a reduction in variation in the air-fuel ratio of the air-fuel mixture.

A control unit according to the present invention is realized by having the ECU 20 execute the residual-gas-amount-adjustment-processing routine of Fig. 4 in the manner described above. In so doing, variation in the air-fuel ratio caused by a switch in the using fuel can be suppressed without correctively increasing the amount of liquid fuel or enlarging an operating region in which the gaseous fuel is used. As a result, increases in exhaust emissions and torque variation caused by a switch in the using fuel can be suppressed.

### (Second Embodiment)

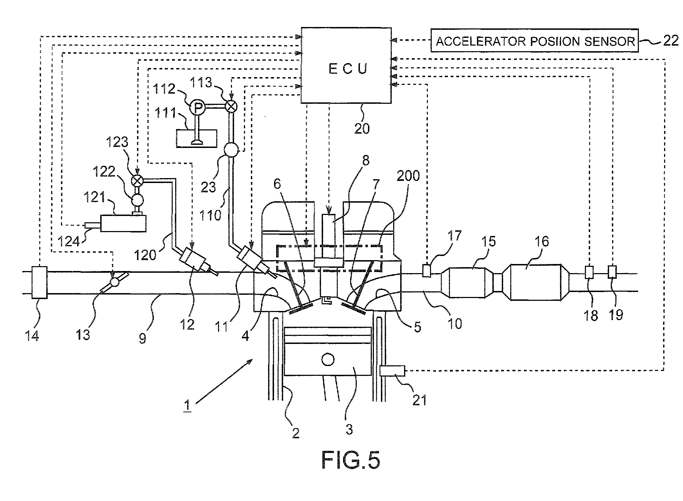

Next, a second embodiment of the control system for a multi-fuel internal combustion engine according to the present invention will be described on the basis of Figs. 5 to 7. Here, configurations that differ from the first embodiment will be described while omitting description of identical configurations.

This embodiment differs from the first embodiment in that in the first embodiment, as described above, the closing timing (EVC) of the exhaust valve 7 is fixed while the liquid fuel is in use, whereas in this embodiment, the closing timing (EVC) of the exhaust valve 7 during use of the liquid fuel is modified in accordance with a concentration of alcohol fuel contained in the liquid fuel.

Fig. 5 is a schematic view showing a configuration of an internal combustion engine according to this embodiment. In Fig. 5, identical constituent elements to the first embodiment have been allocated identical reference numerals. In Fig. 5, an alcohol concentration sensor 23 is attached to the first fuel passage 110. The alcohol concentration sensor 23 is a sensor that outputs an electric signal correlating with the concentration of the alcohol contained in the liquid fuel flowing through the first fuel passage 110, and corresponds to a detection unit according to the present invention. An output signal from the alcohol concentration sensor 23 is input into the ECU 20. All other configurations are identical to the internal combustion engine according to the first embodiment, described above.

Alcohol fuel such as methanol, ethanol, and butanol may be intermixed into liquid fuel such as gasoline. When alcohol fuel is intermixed into the liquid fuel, the liquid fuel vaporizes less easily than when no alcohol fuel is intermixed. This tendency becomes gradually more apparent as the concentration of the alcohol fuel contained in the liquid fuel increases. In other words, when the concentration of the alcohol fuel contained in the liquid fuel is high, an evaporativity of the liquid fuel is lower than when the concentration is low.

Hence, in the residual-gas-amount-adjustment-processing according to this embodiment, the ECU 20 adjusts the amount of burned gas (the amount of residual gas) remaining in the cylinder 2 when the liquid fuel is supplied in accordance with the concentration of the alcohol contained in the liquid fuel (i.e. in accordance with the output signal from the alcohol concentration sensor 23).

More specifically, when the output signal from the alcohol concentration sensor 23 (the alcohol concentration) is high, the ECU 20 makes the closing timing (EVC) of the exhaust valve 7 during use of the liquid fuel earlier than the closing timing (EVC) when the output signal is low. At this time, as described above in the first embodiment, the opening timing (IVO) of the intake valve 6 is assumed to be fixed at a predetermined time before exhaust top dead center (TDC).

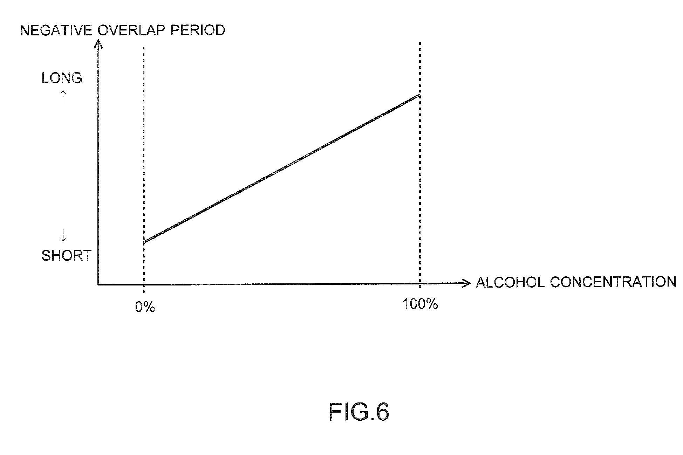

As shown in Fig. 6, by setting the opening and closing timings of the intake and exhaust valves 6, 7 thus, a negative overlap period during use of the liquid fuel is longer when the alcohol concentration is high than when the alcohol concentration is low. Here, the "negative overlap period" is a period extending from the closing timing (EVC) of the exhaust valve 7 to the opening timing (IVO) of the intake valve 6, in which both the intake valve 6 and the exhaust valve 7 are closed.

When the negative overlap period is long, the closing timing (EVC) of the exhaust valve 7 is earlier than when the negative overlap period is short. Therefore, when the negative overlap period is long, the amount of burned gas remaining in the cylinder 2 is larger than when the negative overlap period is short. Further, when the negative overlap period is long, a period in which the residual gas is compressed by the piston 3 is longer than when the negative overlap period is short. As a result, a quantity of heat held by the residual gas becomes larger when the negative overlap period is long than when the negative overlap period is short.

Hence, by executing the residual-gas-amount-adjustment-processing using the method described above, the fuel adhered to the wall surface of the intake port 4, the head portion of the intake valve 6, and the inner wall surface of the cylinder 2 can be vaporized and evaporated even when the concentration of the alcohol fuel contained in the liquid fuel is high.

Further, when the concentration of the alcohol fuel contained in the liquid fuel is high, the amount of unburned fuel components scraped up by the piston 3 during the exhaust stroke may become larger than when the alcohol concentration is low. However, by making the negative overlap period during use of the liquid fuel longer (i.e. by advancing the closing timing (EVC) of the exhaust valve 7) when the alcohol concentration of the liquid fuel is high than when the alcohol concentration is low, the amount of unburned fuel components discharged into the exhaust port 5 from the cylinder 2, of the unburned fuel components scraped up by the piston 3, can be reduced.

Note that a relationship between the alcohol concentration and the closing timing (EVC) of the exhaust valve 7 is preferably determined in advance by adjustment processing using experiments and the like.

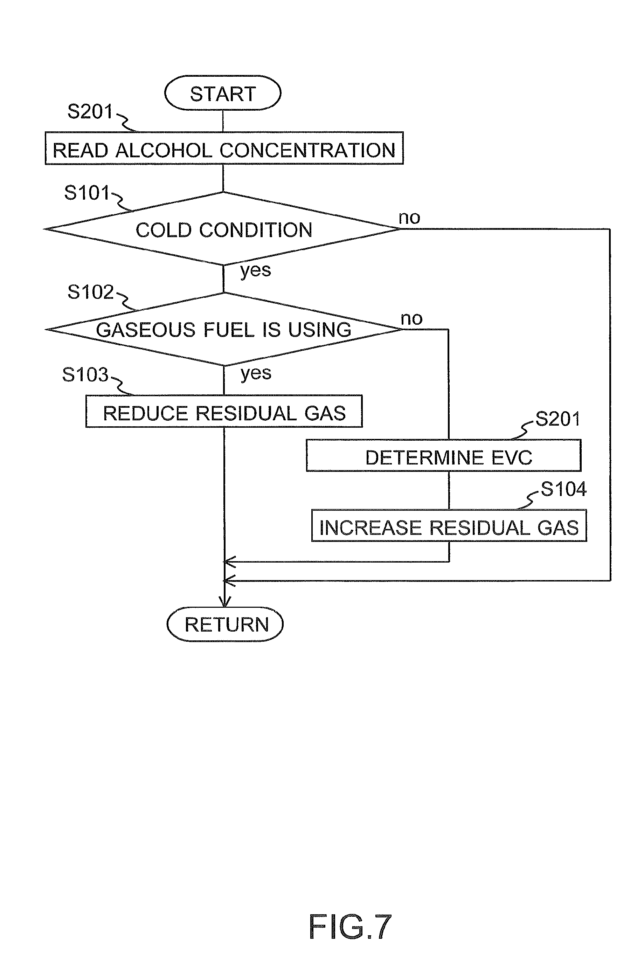

Procedures for executing the residual-gas-amount-adjustment-processing according to this embodiment will now be described using Fig. 7. Fig. 7 is a flowchart showing a residual-gas-amount-adjustment-processing routine according to this embodiment. In Fig. 7, identical processes to the residual-gas-amount-adjustment-processing routine of the first embodiment (see Fig. 4) have been allocated identical reference symbols.

In the residual-gas-amount-adjustment-processing routine of Fig. 7, the ECU 20 executes processing of S201 before executing the processing of S101. In S201, the ECU 20 reads the output signal of the alcohol concentration sensor 23 (i.e. the alcohol concentration).

Further, when the determination of S102 is negative, the ECU 20 executes processing of S202 before executing the processing of S104. In S202, the ECU 20 determines the closing timing (EVC) of the exhaust valve 7 using the alcohol concentration read in S201 as a parameter. At this time, the relationship between the alcohol concentration and the closing timing (EVC) of the exhaust valve 7 may be stored in the ROM of the ECU 20 in the form of a map or stored in the ROM of the ECU 20 in the form of a relational expression having the alcohol concentration as an argument.

After executing the processing of S202, the ECU 20 executes the processing of S104. In S104, processing for increasing the residual gas amount is executed in accordance with the closing timing (EVC) of the exhaust valve 7 determined in S202. More specifically, the ECU 20 controls the variable valve mechanism 200 to set the opening timing (IVO) of the intake valve 6 at an earlier timing than exhaust top dead center (TDC) and set the closing timing (EVC) of the exhaust valve 7 at the timing determined in S202.

By executing the residual-gas-amount-adjustment-processing in accordance with the residual-gas-amount-adjustment-processing routine of Fig. 7, variation in the amount of wall surface adhered fuel and variation in the air-fuel ratio before and after a switch in the using fuel can be suppressed even when alcohol fuel is intermixed into the liquid fuel or alcohol fuel is used as the liquid fuel.

Note that in the residual-gas-amount-adjustment-processing routine of Fig. 7, the output signal of the alcohol concentration sensor 23 is read before executing the processing of S101. However, the output signal of the alcohol concentration sensor 23 may be read before executing the processing of S202 (in a case where the determination of S102 is negative).

### (Third Embodiment)

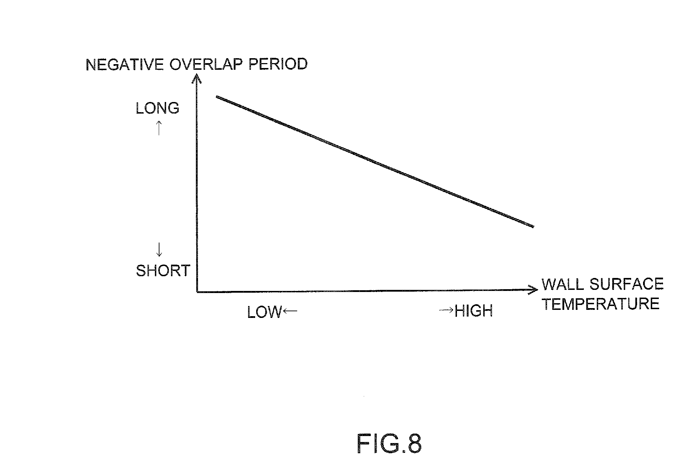

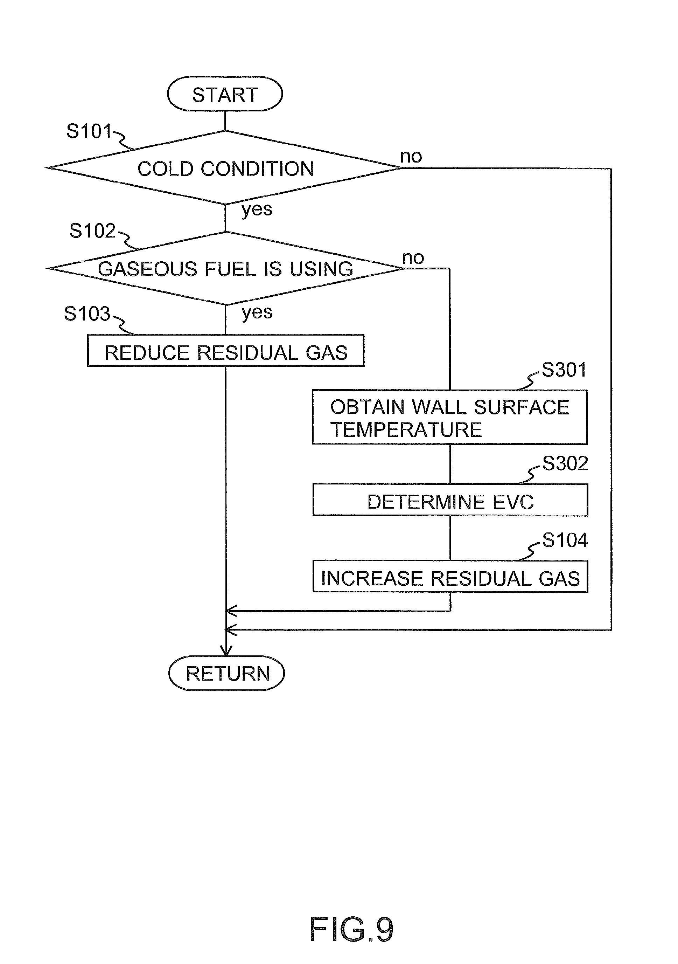

Next, a third embodiment of the control system for a multi-fuel internal combustion engine according to the present invention will be described on the basis of Figs. 8 and 9. Here, configurations that differ from the first embodiment will be described while omitting description of identical configurations.

This embodiment differs from the first embodiment in that in the first embodiment, as described above, the closing timing (EVC) of the exhaust valve 7 during use of the liquid fuel is fixed, whereas in this embodiment, the closing timing (EVC) of the exhaust valve 7 during use of the liquid fuel is modified in accordance with a wall surface temperature of the intake port 4 and so on.

When the liquid fuel is in use, the amount of liquid fuel adhered to the wall surface of the intake port 4, the head portion of the intake valve 6, the inner wall surface of the cylinder, and so on varies according to the temperature (the wall surface temperature) in the corresponding site. For example, the amount of wall surface adhered liquid fuel is smaller when the wall surface temperature is high than when the wall surface temperature is low.

Hence, in the residual-gas-amount-adjustment-processing according to this embodiment, the ECU 20 adjusts the amount of burned gas (the amount of residual gas) remaining in the cylinder 2 during use of the liquid fuel in accordance with the wall surface temperature.

More specifically, the ECU 20 makes the closing timing (EVC) of the exhaust valve 7 during use of the liquid fuel earlier when the wall surface temperature is low than when the wall surface temperature is high. At this time, as described above in the first embodiment, the opening timing (IVO) of the intake valve 6 is assumed to be fixed at a predetermined time before exhaust top dead center (TDC).

As shown in Fig. 8, by setting the opening and closing timings of the intake and exhaust valves 6, 7 thus, the negative overlap period during use of the liquid fuel becomes longer when the wall surface temperature is low than when the wall surface temperature is high. As a result, the quantity of heat held by the residual gas becomes larger when the wall surface temperature is low than when the wall surface temperature is high.

Hence, by executing the residual-gas-amount-adjustment-processing using the method described above, the fuel adhered to the wall surface of the intake port 4, the head portion of the intake valve 6, and the inner wall surface of the cylinder 2 can be vaporized and evaporated even when the wall surface temperature is low.

Further, when the wall surface temperature is low, the amount of unburned fuel components scraped up by the piston 3 during the exhaust stroke may become larger than when the wall surface temperature is high. However, by making the negative overlap period during use of the liquid fuel longer (i.e. by advancing the closing timing (EVC) of the exhaust valve 7) when the wall surface temperature is low than when the wall surface temperature is high, the amount of unburned fuel components discharged into the exhaust port 5 from the cylinder 2, of the unburned fuel components scraped up by the piston 3, can be reduced.

Note that a relationship between the wall surface temperature and the closing timing (EVC) of the exhaust valve 7 is preferably determined in advance by adjustment processing using experiments and the like.

Procedures for executing the residual-gas-amount-adjustment-processing according to this embodiment will now be described using Fig. 9. Fig. 9 is a flowchart showing a residual-gas-amount-adjustment-processing routine according to this embodiment. In Fig. 9, identical processes to the residual-gas-amount-adjustment-processing routine of the first embodiment (see Fig. 4) have been allocated identical reference symbols.

In the residual-gas-amount-adjustment-processing routine of Fig. 9, when the determination of S102 is negative, the ECU 20 executes processing of S301 and S302 before executing the processing of S104. In S301, the ECU 20 obtains the wall surface temperature of the intake port 4 and so on. At this time, the ECU 20 may obtain the output signal of the water temperature sensor 21 (i.e. the cooling water temperature) as a value correlating with the wall surface temperature, or may obtain the temperature (oil temperature) of the lubricating oil as the value correlating with the wall surface temperature. Alternatively, the ECU 20 may calculate the wall surface temperature based on the cooling water temperature, the oil temperature, an intake air temperature, and so on. An obtaining unit according to the present invention is realized by having the ECU 20 execute the processing of S301 in this manner.

In S302, the ECU 20 determines the closing timing (EVC) of Lhe exhaust valve 7 using the wall surface temperature obtained in S301 as a parameter. At this time, the relationship between the wall surface temperature (the cooling water temperature) and the closing timing (EVC) of the exhaust valve 7 may be stored in the ROM of the ECU 20 in the form of a map or stored in the ROM of the ECU 20 in the form of a relational expression having the wall surface temperature (the cooling water temperature) as an argument.

After executing the processing of S302, the ECU 20 executes the processing of S104. In S104, processing for increasing the residual gas amount is executed in accordance with the closing timing (EVC) of the exhaust valve 7 determined in S302. More specifically, the ECU 20 controls the variable valve mechanism 200 to set the opening timing (IVO) of the intake valve 6 at an earlier timing than exhaust top dead center (TDC) and set the closing timing (EVC) of the exhaust valve 7 at the timing determined in S302.

By executing the residual-gas-amount-adjustment-processing in accordance with the residual-gas-amount-adjustment-processing routine of Fig. 9, variation in the amount of wall surface adhered fuel and variation in the air-fuel ratio before and after a switch in the using fuel can be suppressed regardless of the wall surface temperature.

Note that the residual-gas-amount-adjustment-processing according to this embodiment may be combined with the residual-gas-amount-adjustment-processing according to the second embodiment, described above. In this case, the ECU 20 may first determine the closing timing (EVC) of the exhaust valve 7 in accordance with the alcohol concentration, and then correct the determined closing timing (EVC) in accordance with the wall surface temperature. By determining the closing timing (EVC) of the exhaust valve 7 during use of the liquid fuel in accordance with both the alcohol concentration and the wall surface temperature, the amount of wall surface adhered fuel during use of the liquid fuel can be reduced more reliably.

### (Fourth Embodiment)

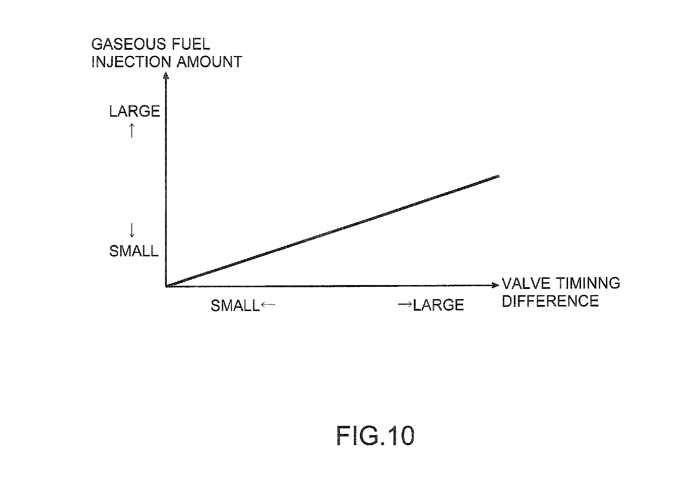

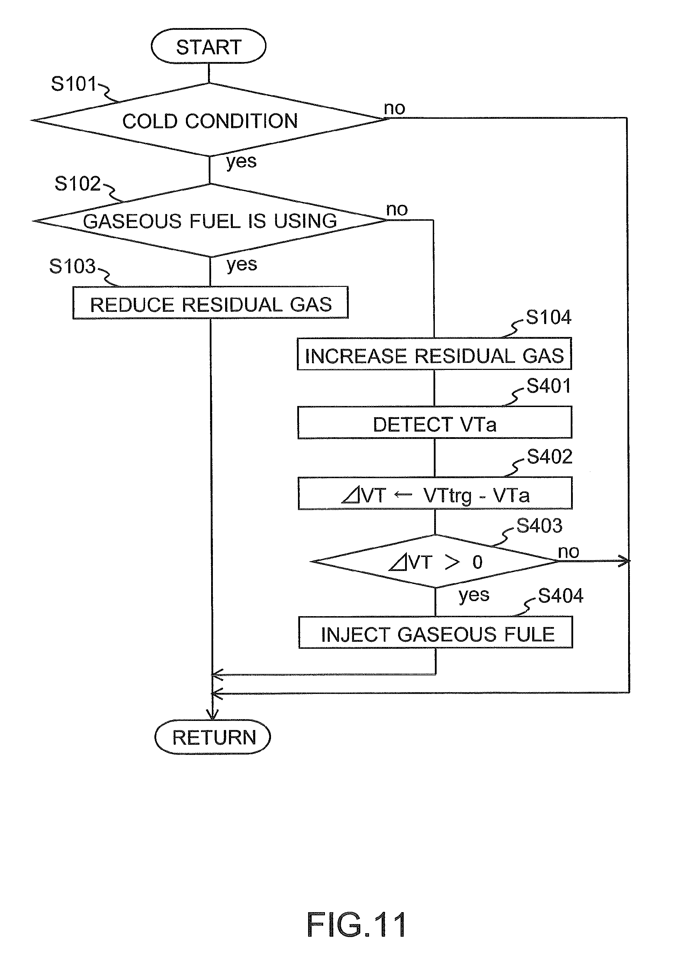

Next, a fourth embodiment of the control system for a multi-fuel internal combustion engine according to the present invention will be described on the basis of Figs. 10 and 11. Here, configurations that differ from the first embodiment will be described while omitting description of identical configurations.

This embodiment differs from the first embodiment described above in that variation in the air-fuel ratio caused by variation in the amount of wall surface adhered fuel during a response delay period of the variable valve mechanism 200 is compensated for by supplying the gaseous fuel.

The variable valve mechanism 200 cannot change the opening and closing timings of the intake and exhaust valves 6, 7 immediately after a control signal is input therein from the ECU 20. In other words, a small amount of time (a response delay period) is required for the opening and closing timings of the intake and exhaust valves 6, 7 to reach target timings following input of the control signal into the variable valve mechanism 200 from the ECU 20. In a mechanism that changes the rotational phase of the cam shaft relative to the crankshaft in particular, it is likely to take time for the phase of the cam shaft to reach a desired phase following input of the control signal.

During the response delay period, therefore, the residual gas amount is smaller than after the response delay period has elapsed. Accordingly, the amount of wall surface adhered fuel during the response delay period is larger than after the response delay period has elapsed. When the amount of wall surface adhered fuel is large, the air-fuel ratio of the air-fuel mixture becomes higher (shifts further to a lean side) than when the amount of wall surface adhered fuel is small. As a result, during the response delay period, the torque generated by the internal combustion engine 1 may decrease and exhaust emissions may increase.

Hence, in the residual-gas-amount-adjustment-processing according to this embodiment, the ECU 20 controls the supply device such that during the response delay period, both the liquid fuel and the gaseous fuel are supplied to the internal combustion engine 1.

More specifically, when an actual closing timing (EVC) and a target closing timing of the exhaust valve 7 differ from each other while the liquid fuel is in use, the ECU 20 causes the second fuel injection valve 12 to inject the gaseous fuel. At this time, an amount of fuel injected from the second fuel injection valve 12 is preferably set at an amount of gaseous fuel corresponding to the amount of wall surface adhered liquid fuel.

Here, the amount of wall surface adhered liquid fuel correlates with a difference between the actual closing timing (EVC) and the target closing timing of the exhaust valve 7. In other words, the amount of wall surface adhered liquid fuel is larger when the difference between the actual closing timing and the target closing timing of the exhaust valve 7 is large than when the difference is small.

Accordingly, as shown in Fig. 10, the ECU 20 causes the second fuel injection valve 12 to inject a larger amount of gaseous fuel when the difference (a valve timing difference) between the actual closing timing and the target closing timing of the exhaust valve 7 is large than when the difference is small.

By controlling the supply device as described above, the air-fuel ratio during the response delay period becomes equal to the air-fuel ratio following the elapse of the response delay period and the air-fuel ratio before the switch in the using fuel (i.e. during use of the gaseous fuel). In other words, a shift in the air-fuel mixture to the lean side due to an increase in the amount of wall surface adhered liquid fuel during the response delay period is suppressed. As a result, similar effects to the first embodiment can be obtained, and additionally, increases in torque variation and exhaust emissions due to the response delay period of the variable valve mechanism 200 can be suppressed. A method of increasing the amount of liquid fuel when the air-fuel mixture shifts Lo Lhe lean side may also be employed, but this may lead to a further increase in the amount of wall surface adhered fuel. By supplying the gaseous fuel when the air-fuel mixture shifts to the lean side, on the other hand, the shift in the air-fuel mixture to the lean side can be eliminated while suppressing a further increase in the amount of wall surface adhered fuel.

Procedures for executing the residual-gas-amount-adjustment-processing according to this embodiment will now be described using Fig. 11. Fig. 11 is a flowchart showing a residual-gas-amount-adjustment-processing routine according to this embodiment. In Fig. 11, identical processes to the residual-gas-amount-adjustment-processing routine of the first embodiment (see Fig. 4) have been allocated identical reference symbols.

In the residual-gas-amount-adjustment-processing routine of Fig. 11, the ECU 20 executes processing of S401 to S404 after executing the processing of S104. In S401, the ECU 20 detects an actual closing timing VTa of the exhaust valve 7. For example, the ECU 20 detects the actual closing timing VTa of the exhaust valve 7 using a cam position sensor.

In S402, the ECU 20 calculates a difference ΔVT (= VTtrg - VTa) between a target closing timing VTtrg of the exhaust valve 7, set in S104, and the actual closing timing VTa detected in S401.

In S403, the ECU 20 determines whether or not the difference ΔVT calculated in S402 is larger than zero. When the determination of S403 is affirmative (ΔVT > 0), this means that the actual closing timing VTa of the exhaust valve 7 does not match the target closing timing VTtrg. In other words, when the determination of S403 is affirmative, this means that a response delay has occurred in the variable valve mechanism 200. Accordingly, the ECU 20 advances to S404, where the second fuel injection valve 12 is caused to inject the gaseous fuel. At this time, the ECU 20 determines the gaseous fuel injection amount using the difference ΔVT calculated in S402 as a parameter. For example, the ECU 20 may determine the gaseous fuel injection amount on the basis of a map such as that shown in Fig. 10.

When the determination of S403 is negative (ΔVT ≤ 0), on the other hand, this means that the actual closing timing VTa of the exhaust valve 7 matches the target closing timing VTtrg. Accordingly, the ECU 20 stops executing the current routine without causing the second fuel injection valve 12 to inject the gaseous fuel.

By executing the residual-gas-amount-adjustment-processing in accordance with the residual-gas-amount-adjustment-processing routine shown in Fig. 11, a shift in the air-fuel mixture to the lean side due to an increase in the amount of wall surface adhered fuel during the response delay period of the variable valve mechanism 200 is suppressed. As a result, increases in torque variation and exhaust emissions during the response delay period are suppressed.

Note that the residual-gas-amount-adjustment-processing according to this embodiment may be executed in combination with the residual-gas-amount-adjustment-processing according to the second embodiment and/or the residual-gas-amount-adjustment-processing according to the third embodiment. For example, when the target closing timing of the exhaust valve 7 determined in accordance with the alcohol concentration and/or the wall surface temperature differs from the actual closing timing (EVC), the ECU 20 may control the supply device such that the gaseous fuel is injected from the second fuel injection valve 12 in an amount corresponding to the difference. As a result, variation in the air-fuel ratio before and after a switch in the using fuel can be suppressed more reliably.

Examples in which the residual gas amounts before and after a switch are differentiated when the using fuel is switched from the gaseous fuel to the liquid fuel were described in the first to fourth embodiments, but the residual gas amounts before and after a switch may also be differentiated when the using fuel is switched from the liquid fuel to the gaseous fuel. In this case, the ECU 20 may control the variable valve mechanism 200 to make the closing timing of the exhaust valve 7 later after the switch in the using fuel (during use of the gaseous fuel) than before the switch (during use of the liquid fuel). As a result, the amounts of wall surface adhered fuel before and after the switch can be made substantially equal likewise when the using fuel is switched from the liquid fuel to the gaseous fuel.

Further, in the first to fourth embodiments, examples in which the residual-gas-amount-adjustment-processing is executed in an internal combustion engine in which the liquid fuel is injected into the intake passage were described, but the residual-gas-amount-adjustment-processing may also be executed in an internal combustion engine in which the liquid fuel is injected into the cylinder. In this case, the variable valve mechanism 200 may be controlled to ensure that the residual gas does not flow back into the intake passage when the liquid fuel is in use. For example, the opening timing (IVO) of the intake valve 6 during use of the liquid fuel may be set at or later than exhaust top dead center (TDC). With this method, vaporization and atomization of the liquid fuel injected into the cylinder can be promoted, and therefore the amount of wall surface adhered fuel during use of the liquid fuel can be suppressed to an equal amount to the amount of wall surface adhered fuel during use of the gaseous fuel.

### Description Of The Reference Numerals And Symbols

- 1: internal combustion engine
- 2: cylinder
- 3: piston
- 4: intake port
- 5: exhaust port
- 6: intake valve
- 7: exhaust valve
- 8: spark plug
- 9: intake passage
- 10: exhaust passage
- 11: first fuel injection valve
- 12: second fuel injection valve
- 20: ECU
- 21: water temperature sensor
- 110: first fuel passage
- 111: first fuel tank
- 112: first fuel pump
- 113: first shut-off valve
- 120: second fuel passage
- 121: second fuel tank
- 122: regulator
- 123: second shut-off valve
- 124: remainder sensor
- 200: variable valve mechanism

## Claims

1. A control system for a multi-fuel internal combustion engine capable of using a gaseous fuel and a liquid fuel, comprising:
a supply device that supplies at least one of the gaseous fuel and the liquid fuel to the internal combustion engine;
a variable valve mechanism that changes opening and closing timings of an exhaust valve; and
a control unit that controls the variable valve mechanism, when the supply device is switched between supplying the gaseous fuel and supplying the liquid fuel, in a manner such that an amount of burned gas remaining in a cylinder during supply of the liquid fuel is larger than an amount of burned gas remaining in the cylinder during supply of the gaseous fuel.

2. The control system for a multi-fuel internal combustion engine according to claim 1, further comprising:
a detection unit that detects a concentration of alcohol contained in the liquid fuel,
wherein the control unit controls the variable valve mechanism in order to make the amount of burned gas remaining in the cylinder during supply of the liquid fuel larger when the alcohol concentration detected by the detection unit is high than when the alcohol concentration is low.

3. The control system for a multi-fuel internal combustion engine according to claim 1 or 2,
wherein the control unit controls the variable valve mechanism in order to make the closing timing of the exhaust valve earlier when the liquid fuel is supplied than when the gaseous fuel is supplied.

4. The control system for a multi-fuel internal combustion engine according to claim 3,
wherein the control unit controls the variable valve mechanism in a manner such that the closing timing of the exhaust valve during supply of the liquid fuel is earlier than exhaust top dead center and earlier than an opening timing of an intake valve.

5. The control system for a multi-fuel internal combustion engine according to claim 4,
wherein the variable valve mechanism is a mechanism that changes the opening and closing timings of the exhaust valve and opening and closing timings of the intake valve, and
the control unit controls the variable valve mechanism in a manner such that the opening timing of the intake valve during supply of the liquid fuel is earlier than exhaust top dead center.

6. The control system for a multi-fuel internal combustion engine according to any one of claims 3 to 5, further comprising:
an obtaining unit that obtains a temperature correlating with a wall surface temperature of an intake passage or an interior of the cylinder,
wherein the control unit controls the variable valve mechanism in order to make the closing timing of the exhaust valve during supply of the liquid fuel later when the temperature obtained by the obtaining unit is high than when the temperature is low.

7. The control system for a multi-fuel internal combustion engine according to any one of claims 3 to 6,
wherein in a period extending from a point at which the supply device is switched from supplying the gaseous fuel to supplying the liquid fuel to a point at which an actual closing timing of the exhaust valve matches a target closing timing appropriate for supply of the liquid fuel, the control unit controls the supply device in order to supply both the liquid fuel and the gaseous fuel to the internal combustion engine.

8. The control system for a multi-fuel internal combustion engine according to claim 7,
wherein the control unit controls the supply device in order to make an amount of the gaseous fuel which is supplied to the internal combustion engine larger when a difference between the actual closing timing and the target closing timing of the exhaust valve is large than when the difference is small.
